Europäisches Patentamt

European Patent Office

Office européen des brevets

(19)

(11) Numéro de publication : **0 399 940 B1**

(12) **FASCICULE DE BREVET EUROPEEN**

(45) Date de publication du fascicule du brevet :
**21.10.92 Bulletin 92/43**

(21) Numéro de dépôt : **90470027.5**

(22) Date de dépôt : **18.05.90**

㊿ Int. CI.⁵ : **F16L 21/03**

(54) Garniture d'étanchéité, emboîtement destiné à recevoir ladite garniture et joint d'étanchéité ainsi réalisé.

(30) Priorité : **23.05.89 FR 8906889**

(43) Date de publication de la demande :
**28.11.90 Bulletin 90/48**

(45) Mention de la délivrance du brevet :
**21.10.92 Bulletin 92/43**

(84) Etats contractants désignés :
**AT BE CH DE DK ES FR GB GR IT LI LU NL SE**

(56) Documents cités :
**FR-A- 1 168 647**
**FR-A- 1 536 219**
**FR-A- 2 031 925**
**FR-A- 2 554 205**
**GB-A- 1 312 612**
**US-A- 3 856 315**

(73) Titulaire : **PONT-A-MOUSSON S.A.**
**91, Avenue de la Libération**
**F-54017 Nancy (FR)**

(72) Inventeur : **Lagabe, André**
**20 Rue de la Mairie**
**Montauville, F-54700 Pont-à-Mousson (FR)**

(74) Mandataire : **Puit, Thierry et al**
**Centre de Recherches de Pont-à-Mousson**
**Service de Propriété Industrielle Boîte Postale 109**
**F-54704 Pont-à-Mousson Cédex (FR)**

## Description

La présente invention est relative à une garniture d'étanchéité ,en élastomère à une seule dureté, pour joint de tuyaux à bout mâle et à emboîtement, présentant un corps de compression et un talon annulaire d'ancrage en saillie à la surface radiale externe de la garniture.

La présente invention est encore relative à un emboîtement destiné à recevoir une garniture d'étanchéité et à un joint réalisé à partir de cette garniture et de cet emboîtement.

Une telle garniture est destinée à être comprimée radialement entre la surface interne de l'emboîtement d'un des tuyaux à raccorder et la surface externe du bout mâle de l'autre tuyau à raccorder.

Or, une garniture de ce type doit pouvoir assurer une étanchéité parfaite en fonction :

- des tolérances dimensionnelles des tuyaux à raccorder,
- de l'excentration d'un tuyau par rapport à l'autre,
- de la pression du fluide circulant dans la canalisation.

A ces conditions, qui supposent une taille de la garniture suffisamment grande, vient se joindre une condition opposée qui consiste en la limitation des efforts d'emmanchement du bout mâle dans l'emboîtement à des valeurs non dissuasives ce qui impose donc une limitation de la taille de ladite garniture.

On connait, par le brevet FR-A-2 554 205, une garniture d'étanchéité du type décrit ci-avant dans laquelle le talon d'ancrage est prolongé, dans le sens radial interne à la surface interne de la garniture, par un pied annulaire de compression.

Ainsi, la fonction d'ancrage de la garniture dans l'emboîtement est séparée de la fonction d'étanchéité, l'ancrage étant assuré par la combinaison du talon et du pied alors que l'étanchéité est assurée par le corps de compression que prolonge la structure d'ancrage vers le fond de l'emboîtement.

Si une telle garniture permet effectivement d'assurer l'étanchéité dans la gamme de pression et de tolérances dimensionnelles pour lesquelles elle a été construite, il apparaît malgré tout des problèmes dans certaines circonstances.

En effet, il apparaît que, sur chantier, les tuyaux sont parfois posés, non seulement excentrés l'un par rapport à l'autre, mais de plus avec des déviations angulaires pouvant dépasser 10°.

Par ailleurs, il apparaît que, d'un fabriquant de tuyaux centrifugés à un autre, si la valeur des tolérances dimensionnelles de fabrication sont les mêmes, elles ne sont pas définies par rapport aux mêmes diamètres moyens de l'emboîtement et du bout mâle.

Ainsi, se pose le problème de réaliser une garniture d'étanchéité du type défini ci-dessus qui absorbe les tolérances dimensionnelles issues de la fabrication des tuyaux par centrifugation quelle que soit l'origine de ces tuyaux.

La présente invention a donc pour but une garniture d'étanchéité qui résout ce problème.

La présente invention a donc pour objet une garniture d'étanchéité annulaire en élastomère d'axe X-X pour joint de tuyaux, destinée à être comprimée radialement entre la surface interne de l'emboîtement d'un tuyau et la surface externe du bout mâle d'un autre tuyau à raccorder, ladite garniture comprenant :

- un corps d'étanchéité présentant une surface extérieure cylindrique et présentant, à sa surface interne, une surface tronconique suivie d'une surface interne cylindrique d'axe X-X et terminée par une lèvre, puis par un lobe en saillie axiale par rapport à ladite lèvre, une face transversale reliant la surface extérieure cylindrique audit lobe ;
- une structure d'ancrage, constituée d'un talon d'ancrage de surface extérieure cylindrique, en saillie radiale externe par rapport au corps d'étanchéité, et d'un pied annulaire de compression de surface interne cylindrique, en saillie radiale interne par rapport à la surface tronconique du corps d'étanchéité,

la structure d'ancrage étant reliée au corps d'étanchéité par une structure de liaison, présentant une surface tronconique à conicité ouverte vers le corps d'étanchéité dont elle prolonge la surface extérieure cylindrique, ladite surface tronconique étant reliée à la surface externe cylindrique du talon d'ancrage par une face plane ou légèrement tronconique de conicité convergeant vers le corps d'étanchéité, perpendiculaire à l'axe X-X, et par une surface concave courbe de section en forme d'arc de cercle, ladite face plane et ladite surface courbe formant une joue de hauteur telle que le rapport entre ladite hauteur et l'épaisseur du corps d'étanchéité est supérieur à 0,2.

Un autre objet de la présente invention est la réalisation d'un emboîtement destiné à recevoir la garniture selon l'invention.

On connaît à ce titre, par le document GB-A-1 312 612, un emboîtement destiné à recevoir une garniture d'étanchéité et présentant, après un collet d'entrée, une surface interne cylindrique munie d'un épaulement annulaire en saillie radiale interne et ayant, en coupe, une section semi-circulaire.

Ce type d'emboîtement présente cependant l'inconvénient d'être difficile à obtenir par un procédé de coulée par centrifugation car les arêtes vives que constituent les surfaces de jonction entre l'épaulement interne et la surface cylindrique interne entourant celui-ci favorisent l'usure de la boîte à noyaux utilisée et provoquent l'inclusion de sable dans le métal coulé ; il en résulte alors des irrégularités dans la structure du métal du tuyau coulé qui sont susceptibles d'affecter les propriétés mécaniques de ce dernier. Le dimensionnement particulier de l'épaulement décrit dans ce document n'est par ailleurs pas de nature à permettre un ancrage efficace de la garniture d'étanchéité introduite dans l'emboîtement.

Un dernier objet de la présente invention est la réalisation d'un joint d'étanchéité muni de la garniture et de l'emboîtement selon l'invention.

Les autres caractéristiques et avantages ressortiront à la suite de la description qui va suivre faite en référence aux dessins donnés uniquement à titre d'exemples non limitatifs et parmi lesquels:

- la Figure 1 représente une vue partielle en coupe axiale d'une garniture d'étanchéité selon l'invention,

- la Figure 2 représente une vue partielle en coupe axiale d'un emboîtement d'un tuyau à raccorder destiné à recevoir la garniture d'étanchéité selon l'invention,

- la Figure 3 représente un joint d'étanchéité muni de la garniture d'étanchéité et de l'emboîtement selon l'invention.

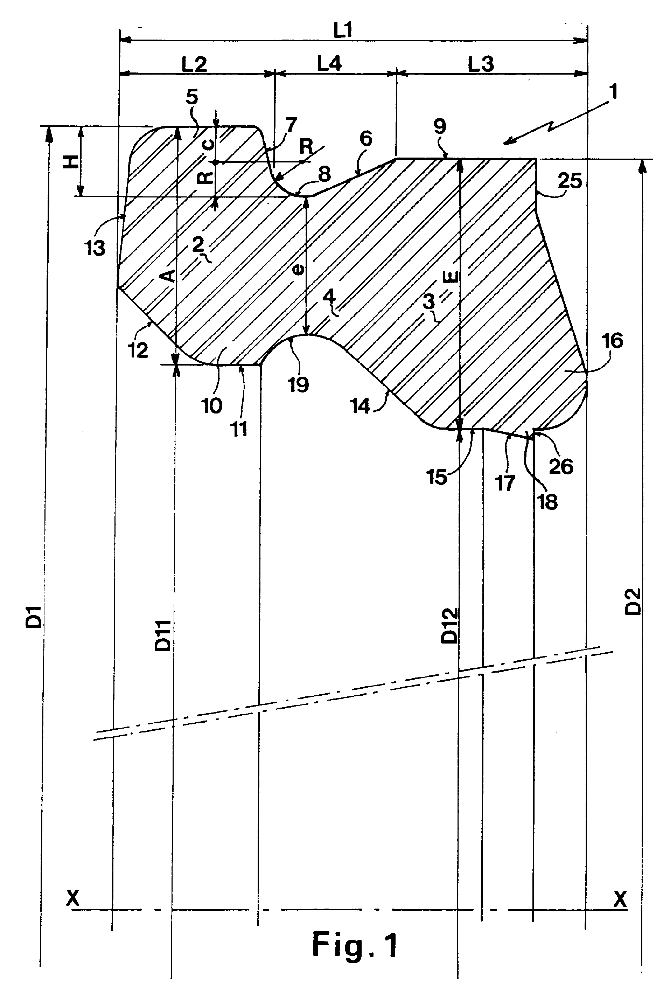

Comme on le voit à la figure 1, une garniture d'étanchéité 1 d'axe X-X selon l'invention présente une structure d'ancrage 2 de longueur axiale L2 et un corps d'étanchéité 3 de longueur axiale L3 prolongeant la structure d'ancrage 2 selon l'axe X-X, une structure intermédiaire de liaison 4 de longueur axiale L4 reliant la structure d'ancrage 2 au corps d'étanchéité 3.

Le longueur axiale L2 de la structure d'ancrage 2 représente de 25% à 35 % de la longueur axiale totale L1 de la garniture 1.

Plus particulièrement, le volume de la structure d'ancrage 2 représente entre 30% et 40% du volume total de la garniture d'étanchéité 1.

La garniture d'étanchéité 1 présente une surface radialement externe constituée d'un talon d'ancrage 5 de la structure d'ancrage 2, de surface externe cylindrique et de diamètre D1, relié à une surface tronconique 6 de la structure de liaison 4 par une face 7, plane, ou légèrement tronconique de conicité convergeant vers le corps d'étanchéité 3, de hauteur "c" et perpendiculaire à l'axe X-X de la garniture 1, et une surface courbe 8, ici de section en forme d'arc de cercle de rayon R.

La surface tronconique 6 se prolonge, selon l'axe X-X, par une surface cylindrique 9 du corps d'étanchéité 3.

Comme on le voit sur la Fig.1, la surface 6 est à conicité ouverte vers le corps d'étanchéité 3, les surfaces 6, 7, 8 formant une surface concave, les surfaces 7 et 8 formant une joue de hauteur H égale à (c+R) et donc de diamètre interne égal à (D1- 2*H).

Comme on le voit toujours Fig 1, le diamètre D2 de la surface cylindrique 9 du corps d'étanchéité est inférieur ou égale à D1 et supérieur à (D1- 2*H).

La garniture d'étanchéité 1 présente, à sa surface interne, un pied annulaire 10, en prolongement radial interne du talon d'ancrage 5, c'est à dire en vis-à-vis de celui-ci.

Ce pied annulaire 10 est constitué par une surface interne cylindrique 11 de diamètre D11 et par une surface d'entrée 12 tronconique d'axe X-X reliée au talon d'ancrage 5 par une surface légèrement tronconique 13 d'axe X-X.

Comme on le voit, la surface tronconique 12 est à conicité convergeant vers le corps d'étanchéité 3 et de demi-angle au sommet compris entre 40° et 48° , ce qui est avantageux comme on le verra plus loin.

La surface tronconique 13 est à conicité ouverte vers le corps d'étanchéité 3 et de demi-angle au sommet supérieur à 80°.

Le corps d'étanchéité 3 présente, à sa surface interne située à proximité du pied annulaire 10, une surface tronconique 14 de demi-angle au sommet d'environ 40°, à conicité ouverte vers la structure d'ancrage 2, suivie d'une seconde surface interne 15 cylindrique d'axe X-X de diamètre interne D12 terminée par une surface tronconique 17 de demi-angle au sommet de 10° à 20°, à conicité ouverte vers la structure d'ancrage 2.

Le diamètre interne D12 de la surface interne 15 est inférieure au diamètre D11 de la surface 11 du pied annulaire 10.

La face transversale de l'extrémité du corps d'étanchéité 3 opposée à la face 13 de la structure d'ancrage 2 présente un lobe 16, en saillie axiale par rapport à cette face transversale et deux faces 25 et 26 constituant une partie de ladite face transversale de part et d'autre du lobe 16.

La surface 26 forme avec la surface 17 une petite lèvre triangulaire 18, la surface 25, plane ou légèrement tronconique perpendiculaire à l'axe X-X, se raccordant à la face cylindrique externe 9 du corps d'étanchéité 3.

Une gorge annulaire 19, située entre le pied annulaire 10 et le corps d'étanchéité 3 à la surface interne de la garniture 1, relie la surface interne 11 du pied 10 à la surface interne tronconique 14 du corps d'étanchéité 3 et constitue la limite radiale interne de la structure de liaison 4.

Comme on le voit Fig.1, l'arête constituée par la surface 11 du pied 10 et la gorge annulaire 19 est située au droit de la surface 7 limitant latéralement le talon d'ancrage 5.

Ainsi, le rapport entre l'épaisseur e minimale de la garniture 1, au droit de la gorge 19 et de la surface courbe 8, et la hauteur H du talon d'ancrage 5 est compris entre 1,3 et 2,5.

Il est en effet apparu, contrairement à ce qui est écrit dans le brevet FR-A-2 554 205, que, particulièrement dans les cas d'excentration maximale et de déviation angulaire entre les deux tuyaux à raccorder, il fallait maintenir une hauteur H du talon d'ancrage 5 suffisante.

Il est apparu plus particulièrement que le rapport entre la hauteur H du talon d'ancrage 5 et l'épaisseur E du corps d'étanchéité devait être supérieur à 0,2 pour que l'effet d'ancrage assuré par le talon d'ancrage 5, en combinaison avec le pied annulaire 10, demeure suffisant.

Préférentiellement le rapport H/E est compris entre 0,25 et 0,38.

Par ailleurs, afin de respecter des taux de compression raisonnables de la garniture 1, qui évitent donc un vieillissement prématuré de l'élastomère constituant la garniture 1, tout en assurant une étanchéité effective dans la gamme des tolérances que la garniture doit absorber, il a été montré que si A représente l'épaisseur de la garniture d'étanchéité au droit du talon 5 et du pied 10, il fallait, d'une part, que le rapport A/E soit compris entre 0,80 et 1, préférentiellement entre 0,85 et 0,95, et, d'autre part, que le rapport (D11 - D12)/(2∗E) soit supérieur à 0,18 préférentiellement entre 0,2 et 0,3.

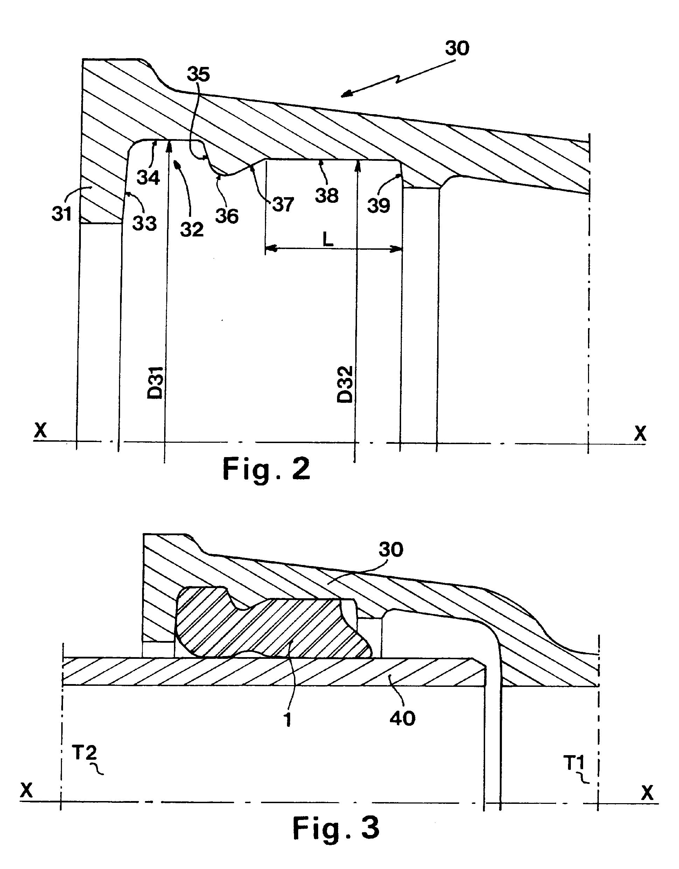

Comme on le voit Fig.2, une garniture d'étanchéité 1 du type décrit ci-avant est destinée à venir être montée à l'intérieur d'un emboîtement 30 d'axe X-X d'un tuyau à raccorder.

Cet emboîtement 30 présente à son extrémité d'entrée, après un collet 31, une gorge 32 coaxiale, constituée d'une face légèrement tronconique 33 poursuivie vers le fond de l'emboîtement 30 par une surface cylindrique 34 de diamètre D31 terminée, dans le sens radial interne, par une surface plane 35, ou légèrement tronconique, perpendiculaire à l'axe X-X.

Cette surface plane 35 se prolonge, vers le fond de l'emboîtement 30, par une courbe convexe 36 et par une surface tronconique 37 qui se raccorde finalement à une surface cylindrique 38 de diamètre D32 inférieur au diamètre D31 de la surface cylindrique 34 de la gorge 32 de l'emboîtement 30.

Comme illustré Fig.2, la surface tronconique 37 est à conicité ouverte vers le fond de l'emboîtement 30.

Ainsi, la surface interne de l'emboîtement 30 est d'un profil correspondant au profil externe de la garniture 1.

La surface cylindrique 38 se termine, au fond de l'emboîtement 30, par une butée radiale 39 qui limite la longueur L de cette surface cylindrique 38.

Comme illustré Fig.3, une garniture d'étanchéité 1 du type décrit ci-avant est destinée à venir être montée dans un emboîtement 30 d'un tuyau T1 dans lequel le talon d'ancrage 5 vient se loger dans la gorge 32 dudit emboîtement, les surfaces 6,7,8,9 de la garniture 1 venant au contact des surfaces correspondantes 35,36,37,38 de l'emboîtement 30.

Comme décrit dans le document FR-A-2 554 205, il est ensuite introduit, dans l'emboîtement 30, un bout mâle 40 d'un tuyau T2 qui provoque la compression du pied annulaire 10 ce qui repousse le talon d'ancrage 5 dans la gorge 32 de l'emboîtement 30.

Ainsi, la stabilité de la garniture d'étanchéité 1 dans l'emboîtement 30 est assurée ce qui évite un entraînement de ce talon d'ancrage 5 lors de la poursuite de la pénétration du bout mâle 40 dans l'emboîtement 30 et donc un entraînement de la garniture d'étanchéité 1 vers le fond de l'emboîtement 30.

Le profil particulier de l'emboîtement 30 est lié à la condition exposée ci-avant relative à la hauteur H du talon d'ancrage et au procédé de coulée par centrifugation.

En effet, si il est maintenu un corps d'étanchéité 3 lié directement au talon d'ancrage 5 (comme c'est le cas dans le brevet FR-A-2 554 205), le diamètre externe du talon d'ancrage, compte tenu de sa hauteur H, devient tel que l'épaisseur de l'emboîtement 30 au droit de la gorge 32 devient insuffisant pour permettre une résistance mécanique réelle de cet emboîtement 30.

Il convenait donc d'obtenir une hauteur H du talon 5 suffisante par rapport à l'épaisseur E du corps d'étanchéité 3 tout en n'entraînant pas une diminution correspondante de l'épaisseur de l'emboîtement 3 au droit de sa gorge 32.

Ceci a été obtenu grâce à l'utilisation d'un talon d'ancrage 5 réalisé à l'aide d'un décrochement résultant des surfaces 6,7,8 de la garniture 1 (et des surfaces correspondantes 35,36,37 de l'emboîtement 30) sans lequel la valeur de la hauteur du talon 5 serait seulement égale à (D1-D2)/2, D1 étant le diamètre du talon d'ancrage 5 et D2 le diamètre de la surface cylindrique externe 9 du corps d'étanchéité 3.

En outre, la valeur particulière du demi-angle au sommet de la surface tronconique 12 du pied 10 permet d'introduire un bout mâle d'un tuyau à raccorder dans un emboîtement d'un autre tuyau à raccorder avec des déviations angulaires d'un tuyau par rapport à l'autre supérieures à 10° ainsi que dans le cas où le bout mâle qui doit être introduit présente un chanfrein d'extrémité inexistant ou trop imparfait.

De plus, la butée 39 limite l'entraînement de la garniture d'étanchéité 1 au fond de l'emboîtement 30.

Par ailleurs, le volume relatif de la structure d'ancrage 2 par rapport au volume total de la garniture d'étanchéité 1 permet d'éviter une expulsion de la garniture en dehors de l'emboîtement lors de la circulation de fluides sous forte pression à l'intérieur de la canalisation.

Enfin, la coopération de la surface tronconique 13 de la garniture d'étanchéité 1 avec la surface tronconique 33 de l'emboîtement 30 assure une parfaite pénétration du talon d'ancrage 5 dans la gorge 32.

Ainsi, la garniture d'étanchéité et l'emboîtement selon l'invention permettent de réaliser un joint d'étanchéité absorbant la totalité des tolérances de fabrication des tuyaux centrifugés en permettant par ailleurs une introduction du bout mâle d'un tuyau dans l'emboîtement d'un autre tuyau présentant une déviation angulaire de plus de 10° tout en évitant l'expulsion de la garniture d'étanchéité hors de l'emboîtement et en conservant des efforts d'emmanchement non dissuasifs.

## Revendications

1.- Garniture d'étanchéité annulaire (1) en élastomère d'axe X-X pour joint de tuyaux, destinée à être comprimée radialement entre le surface interne de l'emboîtement (30) d'un tuyau (T1) et la surface externe du bout mâle (40) d'un autre tuyau (T2) à raccorder, ladite garniture comprenant :

- un corps d'étanchéité (3) d'épaisseur E présentant une surface extérieure cylindrique (9) de diamètre D2 et présentant, à sa surface interne, une surface tronconique (14) suivie d'une surface interne (15) cylindrique d'axe X-X et de diamètre interne D12 et terminée par une lèvre (18), puis par un lobe (16) en saillie axiale par rapport à ladite lèvre, une face transversale (25) reliant la surface extérieure cylindrique (9) audit lobe (16)

- une structure d'ancrage (2) d'épaisseur A, constituée d'un talon d'ancrage (5) de surface extérieure cylindrique de diamètre D1, en saillie radiale externe par rapport au corps d'étanchéité (3), et d'un pied annulaire (10) de compression de surface interne cylindrique (11) de diamètre interne D11, en saillie radiale interne par rapport à la surface tronconique (14) du corps d'étanchéité (3),

ladite garniture d'étanchéité (1) étant caractérisée en ce que la structure d'ancrage (2) est reliée au corps d'étanchéité (3) par une structure de liaison (4) présentant une surface tronconique (6) à conicité ouverte vers le corps d'étanchéité (3) dont elle prolonge la surface extérieure cylindrique (9), ladite surface tronconique (6) étant reliée à la surface externe cylindrique du talon d'ancrage (5) par une face (7) plane ou légèrement tronconique de conicité convergeant vers le corps d'étanchéité (3), perpendiculaire à l'axe X-X, et par une surface concave courbe (8) de section en forme d'arc de cercle, ladite face plane (7) et ladite surface courbe (8) formant une joue de hauteur H telle que le rapport entre ladite hauteur H et l'épaisseur E du corps d'étanchéité (3) est supérieur à 0,2.

2.- Garniture d'étanchéité (1) selon la revendication 1 caractérisée en ce que le rapport A/E de l'épaisseur de la structure d'ancrage (2) par rapport à l'épaisseur du corps d'étanchéité (3) est compris entre 0,80 et 1, le rapport (D11-D12)/(2∗E) étant supérieur à 0,18.

3.- Garniture d'étanchéité (1) selon la revendication 1 caractérisée en ce que le diamètre D2 de la surface extérieure cylindrique (9) du corps d'étanchéité (3) est inférieur ou égal au diamètre D1 de la surface extérieure cylindrique du talon d'ancrage (5).

4.- Garniture d'étanchéité (1) selon la revendication 1 caractérisée en ce que le pied annulaire (10) présente une face d'entrée tronconique (12), de demi angle au sommet compris entre 40° et 48°, reliée au talon d'ancrage (5) par une surface (13).

5.- Garniture d'étanchéité (1) selon la revendication 4 caractérisée en ce que la surface (13) reliant la surface tronconique (12) du pied annulaire (10) au talon d'ancrage (5) est tronconique de demi angle au sommet supérieur à 80°.

6.- Emboîtement (30) destiné à recevoir une garniture d'étanchéité (1) selon l'une des revendications précédentes, cet emboîtement présentant, après un collet d'entrée (31), une gorge (32) constituée d'une face légèrement tronconique (33) poursuivie vers le fond de l'emboîtement (30) par une surface cylindrique (34) de diamètre D31, ledit emboîtement (30) étant caractérisé en ce que la gorge (32) se termine, dans le sens radial interne, par une surface plane (35) ou légèrement tronconique, perpendiculaire à l'axe X-X, ladite surface plane (35) se prolongeant vers le fond de l'emboîtement (30) par une courbe convexe (36) et par une surface tronconique (37) qui se raccorde finalement à une surface cylindrique (38) de diamètre D32 inférieur au diamètre D31 de la surface cylindrique (34) de la gorge (32).

7.- Joint d'étanchéité constitué par un emboîtement (30) d'un tuyau (T1) selon la revendication 6, une garniture d'étanchéité (1) selon l'une des revendications 1 à 5 et un bout mâle (40) d'un tuyau (T2) caractérisé en ce que la surface externe (5-6-7-8-9) de la garniture d'étanchéité (1) est d'un profil correspondant à la surface interne (32-36-37-38) de l'emboîtement (30).

## Patentansprüche

1. Ringförmige Dichtung (1) aus Elastomer mit der Achse X-X für eine Rohrdichtung, die dazu dient, radial zwischen der Innenfläche des Muffenkelches (20) eines Rohrs (T1) und der Außenfläche des Einsteckendes (40) eines weiteren zu verbindenden Rohres (T2), das verbunden werden solle komprimiert zu werden, wobei die Dichtung aufweist:

einen Dichtungskörper (3) von der Dicke E, der eine zylindrische äußere Oberfläche (9) von einem Durchmesser D2 aufweist und an seiner Innenseite eine kegelstumpfförmige Fläche (14) aufweist, die von einer inneren zylindrischen Fläche (15) mit der Achse X-X und einem Innendurchmesser D12 gefolgt wird und beendet wird durch eine Lippe (18), sodann durch eine Ausbuchtung (16), die axial bezüglich der Lippe vorspringt und eine Querfläche (25), die die zylindrische äußere Oberfläche (9) mit der Ausbuchtung (16) verbindet;

eine Verankerungsstruktur (2) von der Dicke A, die gebildet wird aus einem Verankerungsabsatz (5) mit einer zylindrischen Außenfläche von einem Durchmesser D1, die radial nach außen vorspringt bezüglich des Dichtungskörpers (3), und einem ringförmigen Fuß (10) zum Komprimieren der inneren zylindrischen Oberfläche (11) mit Innendurchmesser D11, der radial nach innen bezüglich der kegelstumpfförmigen Fläche (14) des Dichtungskörpers (3) vorspringt,

wobei die Dichtung (1) dadurch gekennzeichnet ist, daß die Verankerungsstruktur (2) mit dem Dichtungskörper (3) durch eine Verbindungsstruktur (4) verbunden ist, die eine kegelstumpfförmige Oberfläche (6) mit einer Konizität aufweist, die zu dem Dichtungskörper (3) offen ist, von dem sie die äußere zylindrische Oberfläche (9) verlängert, wobei die kegelstumpfförmige Oberfläche (6) mit der äußeren zylindrischen Oberfläche des Verankerungsabsatzes (5) durch eine ebene oder leicht kegelstumpfförmige Fläche (7) verbunden ist, mit einer zu dem Dichtungskörper (3) konvergierenden Konizität, senkrecht zur Achse X-X und durch eine gekrümmte konkave Oberfläche (8), die einen Querschnitt in Form eines Kreisbogens aufweist, wobei die ebene Fläche (7) und die gekrümmte Fläche (8) ein Seitenteil von der Höhe H derart bilden, daß das Verhältnis zwischen der Höhe H und der Dicke E des Dichtungskörpers (3) größer als 0,2 ist.

2. Dichtung (1) nach Anspruch 1, **dadurch gekennzeichnet**, daß das Verhältnis A/E der Dicke der Verankerungsstruktur (2) bezüglich der Dicke des Dichtungskörpers (3) zwischen 0,80 und 1 liegt, wobei das Verhältnis D11-D12/(2∗E) größer als 0,18 ist.

3. Dichtung (1) nach Anspruch 1, **dadurch gekennzeichnet**, daß der Durchmesser (D2) der zylindrischen äußeren Oberfläche (9) des Dichtungskörpers (3) geringer oder gleich dem Durchmesser D1 der äußeren zylindrischen Oberfläche des Verankerungsabsatzes (5) ist.

4. Dichtung (1) nach Anspruch 1, **dadurch gekennzeichnet**, daß der ringförmige Fuß (10) eine kegelstumpfförmige Eintrittsfläche (12) aufweist, mit einem zwischen 40° und 48° liegenden Halbwinkel, die mit dem Verankerungsabsatz (5) durch eine Oberfläche (13) verbunden ist.

5. Dichtung (1) nach Anspruch 4, **dadurch gekennzeichnet**, daß die Oberfläche (13), die die kegelstumpfförmige Oberfläche (12) des ringförmigen Fußes (10) mit dem Verankerungsabsatz (5) verbindet, kegelstumpfförmig mit einem Halbwinkel von größer als 80° am Eckpunkt ist.

6. Muffenkelch (30), der dazu bestimmt ist, eine Dichtung (1) nach einem der vorhergehenden Ansprüche aufzunehmen, wobei dieser Muffenkelch nach einem Eingangsboden (31) eine Nut (32) aufweist, die mit einer leicht kegelstumpfförmigen Fläche (33) gebildet wird, gefolgt zum Boden des Muffenkelchs (30) von einer zylindrischen Oberfläche (34) von einem Durchmesser D31, wobei der Muffenkelch (30) **dadurch gekennzeichnet** ist, daß die Nut (32) in radialer Richtung nach innen durch eine ebene Oberfläche (35) oder eine leicht kegelstumpfförmige Oberfläche senkrecht zur Achse X-X beendet wird, wobei die ebene Oberfläche (35) sich nach dem Boden des Muffenkelchs (30) durch eine konvexe Krümmung (36) und durch eine kegelstumpfförmige Oberfläche (37) verlängert, die sich schließlich mit einer zylindrischen Oberfläche (38) vom Durchmesser D32 verbindet, der geringer ist als der Durchmesser D31 der zylindrischen Oberfläche (34) der Nut (32).

7. Dichte Verbindung, die aus einem Muffenkelch (30) eines Rohres (T1) nach Anspruch 6, einer Dichtung (1) nach einem der Ansprüche 1 bis 5 und einem Einsteckende (40) eines Rohres (T2) gebildet wird, **dadurch gekennzeichnet**, daß die innere Oberfläche (5-6-7-8-9) der Abdichtung (1) von einem Profil ist, das der inneren Oberfläche (32-36-37-38) des Muffenkelches (30) entspricht.

## Claims

1. Annular packing seal (1) made of elastomer and having an axis X-X, for a pipe joint, intended to be radially compressed between the inner surface of the recess part (30) of a pipe (T1) and the outer surface of the spigot end (40) of another pipe (T2) to be connected, the said packing comprising:
   -a sealing body (3) of thickness E, having a cylindrical outer surface (9) with diameter D2 and having on its inner surface a frustoconical surface (14) followed by a cylindrical inner surface (15) with axis X-X and of internal diameter D12 and ending in a lip (18), then in a lobe (16) projecting axially in relation to the said lip, one transverse face (25) connecting the cylindrical outer surface (9) to the said lobe (16);
   -an anchoring structure (2) of thickness A, formed by an anchoring heel (5) with a cylindrical outer surface of diameter D1, outwardly radially projecting in relation to the sealing body (3), and by an annular compression foot (10) with a cylindrical inner surface (11) of internal diameter D11, inwardly radially projecting in relation to the frustoconical surface (14) of the sealing body (3),
   the said packing seal (1) being characterized in that the anchoring structure (2) is connected to the sealing body (3) by a link structure (4) having a frustoconical surface (6) with its cone opening towards the sealing body (3), whereof it extends the cylindrical outer surface (9), the said frustoconical surface (6) being connected to the cylindrical outer surface of the anchoring heel (5) by a planar face (7) or a slightly frustoconical face (7) whereof the cone converges towards the sealing body (3), perpendicular to the axis X-X, and by a concave curved surface (8) of arcuate section, the said planar face (7) and the said curved surface (8) forming a cheek whereof the height H is such that the ratio between the said height H and the thickness E of the sealing body (3) is greater than 0.2.

2.  Packing seal (1) according to Claim 1, characterized in that the ratio A/E of the thickness of the anchoring structure (2) in relation to the thickness of the sealing body (3) is between 0.80 and 1, the ratio (D11 - D12)/(2∗E) being greater than 0.18.

3.  Packing seal (1) according to Claim 1, characterized in that the diameter D2 of the cylindrical outer surface (9) of the sealing body (3) is less than or equal to the diameter D1 of the cylindrical outer surface of the anchoring heel (5).

4.  Packing seal (1) according to Claim 1, characterized in that the annular foot (10) has a frustoconical inlet face (12) whereof the half angle of the vertex is between 40° and 48°, connected to the anchoring heel (5) by a surface (13).

5.  Packing seal (1) according to Claim 4, characterized in that the surface (13) connecting frustoconical surface (12) of the annular foot (10) to the anchoring heel (5) is frustoconical, with a half angle at the vertex greater than 80°.

6.  Recess part (30) designed to receive a packing seal (1) according to one of the preceding claims, this recess part having, after an inlet flange (31), a groove (32) formed by a slightly frustoconical face (33) followed, towards the base of the recess part (30), by a cylindrical surface (34) of diameter D31, the said recess part (30) being characterized in that the groove (32) ends, in the inner radial direction, in a planar surface (35) or slightly frustoconical surface (35), perpendicular to the axis X-X, the said planar surface (35) being extended towards the base of the recess part (30) by a convex curve (36) and by a frustoconical surface (37) which is connected at the end to a cylindrical surface (38) with a diameter D32, less than the diameter D31, of the cylindrical surface (34) of the groove (32).

7.  Sealing joint formed by a recess part (30) of a pipe (T1) according to Claim 6, a packing seal (1) according to one of Claims 1 to 5 and a spigot end (40) of a pipe (T2), characterized in that the outer surface (5-6-7-8-9) of the packing seal (1) has a profile corresponding to the inner surface (32-36-37-38) of the recess part (30).

Fig. 1

**Fig. 2**

**Fig. 3**